# EUROPÄISCHE PATENTSCHRIFT

(11) **EP 1 288 651 B1**
(45) Veröffentlichungstag und Bekanntmachung des Hinweises auf die Patenterteilung: **21.04.2004**
(21) Anmeldenummer: 02021500.0
(22) Anmeldetag: 17.10.1997
(51) Int. Cl.: G01N 21/89, G01N 21/896, G01N 21/88

(54) **Verfahren und Vorrichtung zur Ermittlung von optischen Fehlern**
Method and device for detecting optical faults
Méthode et dispositif pour détecter des défauts optiques

(30) Priorität: 18.10.1996 DE 19643017
(43) Veröffentlichungstag der Anmeldung: 05.03.2003
(62) Teilanmeldung aus: 97953675.2
(73) Patentinhaber: ISRA Glass Vision GmbH, 45768 Marl (DE)
(72) Erfinder: Pingel, Ulrich, 45770 Marl (DE); Niepel, Christian, 45699 Herten (DE)
(74) Vertreter: Sparing, Rolf Klaus

(56) Entgegenhaltungen:
- EP-A- 0 416 302
- EP-A- 0 443 289
- EP-A- 0 484 237
- EP-A- 0 559 524
- EP-A- 0 576 011
- EP-A- 0 726 457
- US-A- 4 310 242
- US-A- 5 343 288

## Beschreibung

Die Erfindung betrifft eine Vorrichtung nach dem Oberbegriff des Anspruchs 1. Die Erfindung betrifft ferner ein Verfahren nach dem Oberbegriff des Anspruchs 26 bzw. 27.

EP-A-0 416 302 zeigt ein bekanntes Verfahren und eine bekannte Vorrichtung. In diesem Verfahren wird ein beleuchtetes Flächenraster über ein Objektiv auf ein Referenzraster abgebildet, eine zu überprüfende Scheibe in den Strahlengang zwischen Flächenraster und Referenzraster angeordnet und das Superponat aus dem Bild des Flächenrasters und dem Referenzraster untersucht; dabei wird das Flächenraster auf ein Referenzraster abgebildet, dessen Flächengröße kleiner ist als die zu untersuchende Scheibe, und das Superponat wird durch eine Videokamera mehrfach aufgenommen, um anschließend mit einem Phasenshiftverfahren ausgewertet zu werden, wobei die aufgenommene Helligkeitsverteilung als Maß für die Brechkraft der Scheibe dient.

Die Durchführung dieses Verfahrens ist ausgesprochen aufwendig. Bei dem Flächenraster handelt es sich im allgemeinen in der Praxis um ein Kreuzraster, das gebildet wird aus alternierenden opaken Streifen und transparenten Streifen, wobei die transparenten Streifen genau so breit sind wie die opaken Streifen, wobei zwei derartige Streifenmuster um 90° versetzt einander überlagert sind. Die zu untersuchende Scheibe wird in den Strahlengang angeordnet und auf das Referenzraster, bei dem es sich um ein Linienraster handelt, das ebenfalls transparente und opake Linien anordnet, und zwar in demselben Breitenverhältnis wie das Flächenraster, abgebildet. Ein erstes praktisches Problem entsteht dann, wenn sich Linien der beiden Raster exakt decken; um diesem Fall vorzubeugen, werden in der Praxis als Flächenraster in der Regel nicht opake Linien verwendet, sondern halbopak, halbdurchlässige Linien. Dadurch wird der Kontrast herabgesetzt.

Um eine Auswertung des sich ergebenden Moiré-Bildes nach dem Phasenshiftverfahren zu ermöglichen, ist es erforderlich, das Superponat des auf das Referenzraster abgebildeten Flächenrasters dreimal abzubilden. Hierbei muß das Referenzraster zweimal um jeweils ein Drittel der Breite eines Linienpaares verschoben werden, so daß im Ganzen mindestens drei Aufnahmen erforderlich sind, um die Phasenverschiebung in einer Dimension (z.B. der Horizontalen) der Scheibe zu ermitteln. Wird in einer senkrecht dazu verlaufenden Dimension (z.B. der Vertikalen) ebenfalls die Ermittlung der Brechkraft der Scheibe gewünscht, müssen von einem zweiten Referenzraster erneut drei Aufnahmen von dem sich ergebenden Moiré-Bild gemacht werden. Es sind also insgesamt sechs Aufnahmen erforderlich, damit mit dem Phasenshiftverfahren die Brechkraft der Scheibe ermittelt werden kann.

Die Vorrichtung zur Durchführung des Verfahrens ist dementsprechend aufwendig, da die Verschiebung des Referenzrasters um ein Drittel der Breite eines Linienpaars auf dem Referenzraster sehr präzise erfolgen muß. Dasselbe gilt für die zweite, zur ersten senkrechten Aufnahme, da es schwierig zu vermeiden ist, daß aufgrund von Positionierungsfehlern ein unerwünschter Moiré-Effekt auftritt. Aufgrund der aufwendigen Handhabung nimmt die Messung der Brechkraft viel Zeit in Anspruch. Zusätzlich kann es bei dem bekannten Verfahren zu unerwünschten Moiré-Bildungen an der "Pixel-Periode" der Kamera (vgl. Sp. 4, Z. 36 - 40) kommen, wenn das Beleuchtungsmuster oder das Referenzmuster das Vielfache einer Periode der Pixel ausmachen. Es müssen daher Maßnahmen ergriffen werden, das Auftreten dieser Konstellation zu vermeiden, denn diese unerwünschten zusätzlichen Moiré-Bilder verfälschen die Auswertung des Bildes der Scheibe.

EP-A-0 559 524 zeigt ein anderes Verfahren, nämlich zur Prüfung der Transparenz insbesondere von Verbundglas nach dem Vorverbund und vor dem Autoklavieren, also zu einem Zeitpunkt, an dem der Vorverbund bzw. die Folie in der Regel eine milchige Farbe aufweist, die die Lichttransmission behindert. Dieses Transmissionsverfahren ordnet eine Lichtquelle einerseits (unterhalb) und eine Kamera zur Beobachtung des erzeugten Prüfbilds andererseits des Vorverbunds an. Das durch die Lichtquelle erzeugte und projizierte Prüfbild ist ein Linienmuster von einigen wenigen Linien. Als Grundlage der Entscheidung, ob eine Verbundglasscheibe "gut" oder "schlecht" ist, dient ein Mittelwert aus allen beobachteten Werten. Eine bestimmte Abbildungsregel der Linien auf die Kamera bzw. deren Pixel ist nicht vorgeschlagen. Auch ist es nicht möglich, Fehler in der Brechkraft, kleine Einschlüsse und dgl. zu detektieren, da sie den gemessenen Mittelwert über das gesamte beobachtete Bild nur minimal beeinflussen.

Die mathematischen Ableitungen von Winkeln ausgehend von gemessenen Moiré-Bildern sowie einen Überblick über die verschiedenen Moiré-Techniken gibt der Aufsatz von Selb, M., und Höfler, H. in "Vision & Voice Magazine", Band 4 (1990), Nr. 2, Seiten 145-151. In diesem Aufsatz werden auch hochauflösende Moiré-Topographiemessungen durch unmittelbar auf einen CCD-Chip abgebildete Gitter, also in einer einstufigen Abbildung ohne Referenzgitter, behandelt.

DE-A-36 00 199 zeigt ein Verfahren zum Ermitteln optischer Fehler in Windschutzscheiben, bei dem ein Strichraster durch eine schräg im Strahlengang angeordnete Windschutzscheibe hindurch projiziert wird und mit einem an einer Projektionsfläche aufgebrachten Raster zur Bildung von Moiré-Streifen überlagert wird. Die Auswertung erfolgt in der Art einer visuellen gut/schlecht-Prüfung.

EP-A-0 726 457 bzw. US-A-5,452,079 beschreiben Vorrichtungen und Verfahren zur Prüfung von Scheiben aus transparentem Material. Hierbei sind beiderseits beispielsweise eines endlos laufenden Glasbandes am Floatausgang einerseits eine Lichtquelle in der Art eines Lichtkastens mit einem physischen Raster mit einer Hell-Dunkel-Musterung und andererseits des Glasbandes mehrere nebeneinander angeordnete Kameras, die das Rasterbild beobachten, um Fehler zu detektieren, angeordnet. Zur Auswertung des Bildes wird die Kamera derart eingestellt, daß sie nur ein sehr unscharfes Bild erfaßt.

In Abhängigkeit von der Art der Fehler (Verunreinigung oder Distorsion) wird ein bestimmtes Signal bzw. eine Änderung im Signal des beobachteten Bildes erfaßt. Die erfaßten Signale erlauben Rückschlüsse auf die Art des Fehlers.

EP-A-0 484 237 beschreibt eine Vorrichtung und ein Verfahren zur Messung der optischen Eigenschaften einer Scheibe, insbesondere einer Windschutzscheibe, bei dem durch eine Windschutzscheibe mittels einer speziellen Kamera ein Muster, vorliegend ein Kreuzgitter, das von einem Raster erzeugt wird, beobachtet wird. Das Raster wird von einer oder mehreren Lichtquellen auf der der Kamera abgewandten Seite des Rasters gleichmäßig beleuchtet, wobei die einzelnen Lampe, die die Lichtquelle bilden, nicht einzeln zur Erzeugung eines besonderen Musters ansteuerbar sind. Fällt eine Lampe aus oder leuchtet sie aus einem anderen Grund nicht, ist die Vorrichtung unbrauchbar. Das Raster ist durch einen Schirm gebildet, der in bekannter Weise vorteilhaft dafür sorgt, daß die lichtdurchlässigen Bereiche diffus gerichtet sind. Für die Beobachtung des Musters durch die Windschutzscheibe hindurch wird eine Zeilenkamera mit verwendet. Die Auswertung des beobachteten Bildes beruht auf einer Auswertung der eingeschlossenen Rechtecke des Kreuzgitters, unter Berücksichtigung der Diagonalen der eingeschlossenen Rechtecke. Darüber hinaus speichert ein Pixelortungskreis die Hell-dunkel- bzw. die Dunkel-hell-Übergänge. Bei der Auswertung werden die hellen bzw. dunklen Bereiche lokalisiert und auf diese Weise in der Art eines Gitters die optischen Eigenschaften der Scheibe durch eine Rechnereinheit bestimmt.

GB-A-2 152 210 beschreibt eine Distorsionsprüfungseinrichtung insbesondere für Verbundglaswindschutzscheiben, bei der das Licht von zwei Lichtquellen indirekt durch eine schwarz-weiß gestreifte Tafel auf die zu untersuchende Windschutzscheibe zurückgeworfen wird, und die Prüfung mittels einer CCD-Kamera vorgenommen wird.

Es ist die Aufgabe der Erfindung, eine Vorrichtung nach dem Oberbegriff des Anspruchs 1 und ein Verfahren nach dem Oberbegriff des Anspruchs 26 bzw. 27 anzugeben, mit der optische Fehler in wenigstens einer Dimension einer Scheibe ermittelbar sind.

Diese Aufgabe wird bei der eingangs genannten Vorrichtung erfindungsgemäß mit den Merkmalen des kennzeichnenden Teils des Anspruchs 1 gelöst. Diese Aufgabe wird bei den eingangs genannten Verfahren erfindungsgemäß mit den Merkmalen des kennzeichnenden Teils des Anspruchs 26 bzw. 27 gelöst.

Es ist in der erfindungsgemäßen Vorrichtung eine Leuchtwand vorgesehen, die in dem erfindungsgemäßen Verfahren für das Projizieren eines Musters mit regelmäßigen Sequenzen zum Einsatz kommt, und die anstelle einer Lichtquelle mit Raster einsetzbar ist. Die Leuchtwand besteht zweckmäßigerweise aus einer Vielzahl von einzelnen LEDs, die beliebig einzeln, blockweise oder in Spalten bzw. Zeilen ansteuerbar sind, um entweder gemäß einem Hell-Dunkel-Profil zu leuchten bzw. nicht zu leuchten oder um in Abhängigkeit einer geeigneten Kennlinie unterschiedliche Intensitäten zu emittieren. Ähnliche Leuchtwände werden zum Beispiel als Anzeigetafeln in Sportstadien eingesetzt. Es versteht sich, daß die Vorrichtung zur Ermittlung von optischen Fehlern, umfassend eine Leuchtwand aus einer Mehrzahl einzeln ansteuerbarer Leuchtfelder als Flächenraster, das auf eine Scheibe projiziert wird, deren Brechkraft ermittelt werden soll, auch dann funktionsfähig ist, wenn sie mit einem Referenzraster aus dem Stand der Technik arbeitet. Es versteht sich, daß die Hell-Dunkel-Sequenz grundsätzlich mit jedem der beiden Raster darstellbar ist. Es versteht sich ferner, daß die Sequenzen auch über Linsen vergrößert werden können, bevor es zur eigentlichen Projektion kommt.

Ein Abbilden des Musters erfolgt auf eine Kamera, wobei eine Sequenz des Musters jeweils auf eine Anzahl benachbart angeordneter Pixel der Kamera abgebildet ist. Vorzugsweise ist die Anzahl ein ganzzahliges Vielfaches der Sequenz.

Eine Sequenz des Musters kann durch eine periodische Folge von zwei oder mehr Lichtintensitäten definiert sein. Im einfachsten Fall handelt es sich um eine Folge, in der helle und dunkle Streifen, vorzugsweise identischer Breite, einander abwechseln und eine Hell-Dunkel-Sequenz bilden. Es ist aber auch möglich, daß die Sequenz aus drei, vier oder mehr Streifen besteht, die eine regelmäßige Abfolge mit stets äquidistanten Intensitätsminima und -maxima aufweist.

Soweit die Anzahl der erfindungsgemäß benachbart angeordneten Pixel die Summe von zwei übersteigt, versteht sich, daß jeweils nicht alle Pixel jeweils zueinander benachbart angeordnet sein können; vielmehr ist gemeint, daß die Pixel paarweise benachbart angeordnet sind derart, daß sie eine von nicht dazugehörigen Pixeln freie, zusammenhängende Sub-Zeile bzw. Sub-Matrix bilden.

Bei dem erfindungsgemäßen Verfahren ist vorzugsweise vorgesehen, daß jeweils ein ganzzahliges Vielfaches, vorzugsweise ein Tripel nebeneinander angeordneter Pixel mit einer Hell-Dunkel-Sequenz, vorzugsweise einem Hell-Dunkel-Paar, das von der Scheibe auf die Kamera abgebildet wird, übereinstimmt. Damit beträgt die Linienpaarbreite des projizierten Beleuchtungsmusters genau das Vielfache der Breite eines Pixels der Kamera, so daß es zu Moiré-Bildungen an der Kamera selbst kommt. Der Einsatz von Hell-Dunkel-Paaren hat den Vorteil, daß die Projektion sehr einfach durch das entsprechende Vorsehen eines Rasters mit nur zwei verschiedenen Lichtdurchlässigkeiten realisierbar ist, zweckmäßigerweise jeweils opake und transparente Bereiche, so daß ein guter Kontrast entsteht.

Erfindungsgemäß wird dieser Effekt ausgenutzt, um auf ein Referenzmuster verzichten zu können, wodurch der apparative Aufbau für eine Vorrichtung zur Durchführung des Verfahrens bereits stark vereinfacht wird, insbesondere der für den Aufbau erforderliche Raum.

Es ist zu verstehen, daß mehrere Wege für die Auswertung des Beleuchtungsmusters zur Verfügung stehen. Zum einen kann die Lichtintensität, die von jedem Pixel aufgenommen wird, der Weiterverarbeitung zugrundegelegt werden. Aufgrund der genauen Breitenverhältnisse lassen sich periodisch wiederkehrende Intensitätsverteilungen herstellen, bei deren Störung der der Störung zugrundeliegende Ablenkwinkel leicht ermittelt werden kann. Zur Ermittlung einer Störung kann sowohl ein Vergleich ohne Scheibe / mit Scheibe in Betracht kommen, als auch, bei genauer Ausrichtung der Anfangspunkte der Linienpaare mit einem Pixeltripel, die Kenntnis der Soll-Lichtintensitäten an jedem Punkt. Im zweiten Fall kann vorzugsweise auf eine Einrichtung mit einem Prüfnormal oder dergl. verzichtet werden.

Ein anderer, aufgrund seiner sehr guten Auflösung bevorzugter Weg der Weiterverarbeitung des Beleuchtungsmusters besteht in der Ausnutzung des an den Pixeln der Kamera auftretenden Moiré-Bildes. Das Moiré-Bild, das an der Kamera erfaßt wird, entsteht durch Überlagerung zweier Helligkeitsverteilungen mit spezifischer Periodizität, wobei über die Breite eines Linienpaares der Sequenz, die einer Hell-Dunkel-Periode entspricht, an dem "Gitter" der Pixel der Kamera der Verlauf näherungsweise einer Sinus-Kurve der Moiré-Struktur erkennbar wird. Es kann sich somit zunutze gemacht werden, daß mittels Moiré-Erscheinungen Deformationen in dem Muster, z.B. infolge von Brechungen in der Scheibe, mit einer um ein Vielfaches höheren Auflösung ermittelt werden können, die sich als Phasenverschiebung des Moiré-Bildes äußert, also als Stauchung oder Dehnung in der durch das Moiré-Bild entstehenden sinusförmigen Kurve.

Wird gemäß einer ersten bevorzugten Weiterbildung der Erfindung ein Linienpaar des Beleuchtungsmusters auf ein Tripel benachbarter Pixel abgebildet, entstehen somit für jedes Linienpaar 3 Moiré-Bildstreifen; es erübrigt sich dann, ein Referenzmuster um ein Drittel gegenüber dem projizierten Muster zu verschieben, statt dessen ist es vorteilhaft möglich, den Wert des zweiten bzw. des dritten Pixels als Wert für die um 120° bzw. 240° (oder -120°) verschobene Aufnahme zugrundezulegen. Diese um 120° (einem Drittel einer vollständigen Sinuskurve) versetzten, von den Pixeln der Kamera erfaßten Moiré-Bild-Streifen können durch einfache Umwandlung mathematisch als von einer Sinus-Funktion abhängige Kurven ausgedrückt werden.

Durch Schwankungen der Brechkraft der Scheiben, beispielsweise einer Windschutzscheibe eines Kraftfahrzeugs, kommt es zu Schwankungen in den Maxima und Minima, die durch die Moiré-Erscheinung auftreten, die sich leicht als Phasenverschiebung in der Sinuskurve ermitteln lassen; ist der Abstand der Kamera von der Scheibe bekannt, läßt sich hieraus der Winkel ermitteln, in dem das durchtretende Licht an der Scheibe gebrochen wird. Durch einfache weitere mathematische Bearbeitung (Differentiation) läßt sich damit die Brechkraft in Dioptrin ermitteln. Insbesondere für die Ermittlung der Brechkraft einer Windschutzscheibe ist dies von großer Bedeutung, denn eine Ablenkung des Blickes in der Vertikalen beeinträchtigt die Geradeaussicht, während eine Ablenkung des Lichts in der Horizontalen die Seitendurchsicht beeinträchtigt. In der DIN 52305 oder der ECE 43 sind Grenzwerte für die maximal zulässige Brechkraft des Glases angegeben, die als Schwellenwerte für einen Vergleich herangezogen werden können, ob eine geprüfte Windschutzscheibe angenommen oder abgelehnt wird.

Wird für das erfindungsgemäße Verfahren ein Muster eingesetzt, das Sequenzen sowohl in der Horizontalen als auch in der Vertikalen einander überlagernd anordnet, dann kann mit einer Matrixkamera gleichzeitig eine Auswertung der Brechkraft sowohl für die Vertikale als auch für die Horizontale vorgenommen werden, ohne daß hierfür die Kamera oder ein Referenzraster gedreht werden müßten. Dieselben Meßwerte der Pixel der Kamera können der Auswertung zugrundegelegt werden, wodurch für jede Auswertung eine Vielzahl an Speicherplatz gespart wird, und eine kompakte Archivierung der Meßdaten möglich ist. Wird die Zahl der einem Hell-Dunkel-Paar zugeordneten Pixel beispielsweise auf vier (fünf) oder größere Vielfache erhöht, wird eine Auswertung mit einem um jeweils 90° (72°) oder entsprechenden Bruchteilen davon verschobenen Phasenshiftverfahren ermöglicht. Im Falle von vier Pixeln ließe sich aufgrund des zusätzlich zur Verfügung stehenden Freiheitsgrads zusätzlich zu Position und Intensitätsextrema leicht die Frequenzverschiebung ermitteln.

Gemäß einer zweiten bevorzugten Weiterbildung der Erfindung ist es möglich, dieselbe Auflösung wie bei einem Tripel von Pixeln durch die Abbildung auf nur jeweils zwei benachbarte Pixel der Kamera zu erzielen. Hierfür ist das Muster nur geringfügig aufwendiger vorzusehen.

In einer ersten Variante ist es möglich, ein Muster mit Sequenzen aus drei Lichtintensitäten auszubilden, wobei diese Sequenz z.B. als drei äquidistante Streifen eines Rasters ausgebildet sein kann. Die Lichtdurchlässigkeiten des Rasters können z.B. jeweils um einen Faktor verschieden sein, beispielsweise 1%, 10%, 100% oder 10% bzw. 0%, 30% bzw. 33%, 90% bzw. 100%. Das von den beiden Pixeln erfaßte Signal läßt sich dann ebenfalls auf eine Sinuskurve rückführen, die eine anschließende Auswertung nach Phasenshiftverfahren zuläßt. Alternativ werden die Lichtintensitäten durch zeilenweise bzw. spaltenweise unterschiedlich stark leuchtende Felder eine Leuchtmatrix erzeugt.

In einer anderen Variante ist es möglich, in jeder Sequenz des Rasters mindestens einen beispielsweise nur für Licht einer bestimmten Wellenlänge (Farbe) transparenten, "ausschaltbaren Streifen" vorzusehen. Durch abwechselndes Beleuchten einmal mit hindurchtretendem Licht und einmal mit absorbiertem Licht wird das Größenverhältnis der Hell-Dunkel-Sequenz unter Beibehaltung ihrer für die Moiré-Erscheinung relevanten "Gitterkonstante" definiert verändert, wodurch sehr einfach Phasenverschiebungen im Moiré-Bild auswertbar werden. Beispielsweise besteht das Raster zur Erzeugung der Hell-Dunkel-Sequenz aus jeweils gleich breiten Streifen, die abwechselnd vollständig opak, für rotes, aber nicht für grünes Licht transparent und vollständig transparent ausgebildet sind. Es ist zum einen möglich, je eine Aufnahme bei Beleuchtung mit rotem bzw. mit grünem Licht vorzunehmen, und dann beide Bilder für die Auswertung zugrundezulegen. Einfacher ist es, in schneller Frequenzfolge abwechselnd rot und grün zu beleuchten, wodurch der "ausschaltbare Streifen" jeweils hell bzw. dunkel erscheint. Durch Integration der Lichtintensität in dem Pixel (das nur hell/dunkel erfaßt, also unabhängig von der Farbe des Lichts) läßt sich eine Phasenauswertung gemäß modifiziertem Phasenshiftverfahren vornehmen.

Eine dritte vorteilhafte Weiterbildung der Erfindung besteht darin, daß jeweils mindestens drei benachbarte Streifen (Zeilen bzw. Spalten) des Rastermusters (die dann eine Sequenz bilden) nacheinander beleuchtet werden, wobei eine entsprechende Anzahl Aufnahmen, also mindestens drei, von der Scheibe gemacht werden, und jede Sequenz auf ein Pixel abgebildet wird (oder auf ein ganzzahliges Vielfaches davon). Diese Weiterbildung läßt sich sowohl mit der vorstehend bereits geschilderten Beleuchtung eines Rasters mit von der Lichtfarbe abhängigen Lichtdurchlässigkeiten realisieren als auch mit einem physischen Filter, das um jeweils die Breite eines Streifens verschoben wird (es versteht sich, daß dann die Streifen äquidistant sind). Besonders vorteilhaft lassen sich Leuchtwände wie die oben beschriebenen einsetzen, die eine schnelle Abfolge der drei Aufnahmen gewährleisten bei gleichzeitig stets reproduzierbarer Lage. Außerdem können mit dieser Leuchtwand auch unmittelbar im Anschluß an die Aufnahmen für die vertikale diejenigen für die horizontale Brechkraft aufgenommen werden. Diese Weiterbildung hat den Vorteil, daß sie zum einen mit der bestehenden Auswertesoftware weiterarbeiten kann, zum anderen nur relativ wenig Kamerapixel benötigt, so daß sie preiswert umgesetzt werden kann. Eine Matrix-Leuchttafel ermöglicht es zum Beispiel auch, im Falle mehrerer, z.B. zueinander inverser, Aufnahmen die Belichtungszeit der Kamera und die Dauer der Beleuchtung im Raster zu synchronisieren. Wenn eine Scheibe mit einer Zeilenkamera abgetastet wird, beispielsweise von oben nach unten, kann dann für jede abgetastete Zeile jede Sequenz einmal beleuchtet werden, wodurch die Auswertung jeder aufgenommenen Sequenz praktisch on-line möglich ist, und die Kamera nur einmal verschwenkt oder verlagert werden muß, um die Scheibe abzutasten.

Es ist gemäß einer weiteren bevorzugten Weiterbildung der Erfindung möglich, auf der Grundlage des vorstehend erläuterten Verfahren eine Vorrichtung zum Ermitteln der Brechkraft in Autoglasscheiben, insbesondere Windschutzscheiben, derart auszubilden, daß das Raster beispielsweise ein Muster mit einer Streifensequenz aufweist, die aus rotem, grünem und blauem im übrigen transparentem Material besteht, so daß die entsprechende Farbe von Licht an dem jeweiligen Streifen nicht durchtritt, und eine Kamera diesen Streifen als "dunkel" registriert. Mit einer Farbkamera läßt sich so bereits für jede der drei Farben ein um ein Drittel verschobenes Hell-Dunkel-Streifenmuster (jeweils eine Sequenz auf zwei benachbarte Pixel) aufnehmen und das resultierende Moiré-Bild anschließend auswerten. Es versteht sich, daß dann die Sequenz der drei Farben auf wenigstens ein Pixel der Kamera oder ein Vielfaches davon abgebildet wird. Alternativ ist es auch möglich, das Raster dann abwechselnd, z.B. mittels LED, mit den drei entsprechenden Farben zu beleuchten, so daß der jeweils entsprechende Streifen dunkel, und die anderen beiden Streifen hell erscheinen. Es ist dann bei einer schwarzweiß Zeilen- oder Matrixkamera zweckmäßig, der Auswertung zwecks Ermittelbarkeit einer Phase mehr als eine Aufnahme mit der Kamera zugrundezulegen.

Die erfindungsgemäßen Verfahren ermöglichen es, sehr genau und sehr schnell die gewünschten Brechkraftindizes zu ermitteln, und sind daher insbesondere für den Einsatz an Kraftfahrzeugscheiben aus vorgespanntem Glas oder aus Verbundsicherheitsglas geeignet sowie für Planglas aus Float-, Ziehoder Walzglasfertigung, Acrylglas oder PVC, LCD-Displays etc. Es ist allerdings auch möglich, mit den erfindungsgemäßen Verfahren andere transparente Materialien auf ihre Brechkraft hin zu untersuchen, was sich insbesondere für Sehhilfen aus Glas oder Kunststoff anbietet und für große Teleskopspiegel, für transparente Kanzeln in Flugzeugen oder Motorradhelmen, etc.

Weitere Ausgestaltungen der Erfindung sind der nachfolgenden Beschreibung und den Unteransprüchen zu entnehmen.

Die Erfindung wird nachstehend anhand von in den beigefügten Abbildungen dargelegtem Prinzipskizzen näher erläutert.

### KURZE BESCHREIBUNG DER ZEICHNUNGEN

Fig. 1 zeigt schematisch den Strahlengang einer Vorrichtung gemäß dem stand der Technik. Gemäß der Erfindung wird anstelle der Lichtquelle 1 und des Rasters 2 eine Leuchtwand bestehend aus einer Vielzahl von einzelnen LEDs verwendet.
Fig. 2 und Fig. 3 zeigen das Verhältnis von Sequenzen eines Beleuchtungsmusters und Kamerapixel für ein ein- bzw. ein zweidimensionales Verfahren.

### BESCHREIBUNG VON BEVORZUGTEN AUSFÜHRUNGSBEISPIELEN

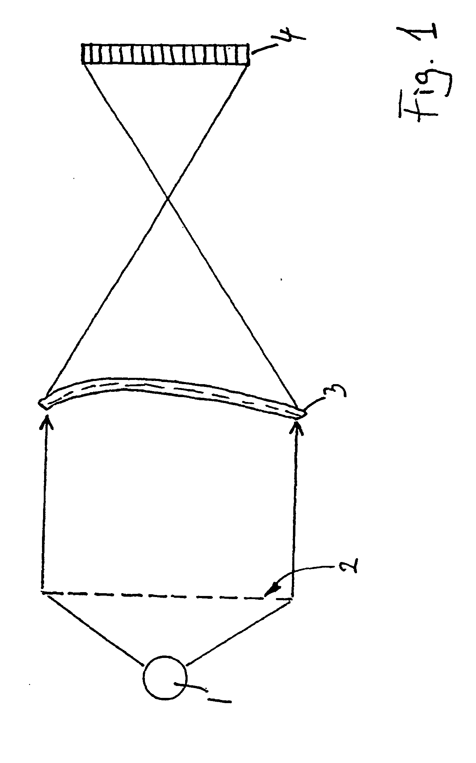

Bezugnehmend auf Fig. 1 erkennt man eine Lichtquelle 1, die ein als Kreuzraster ausgebildetes Beleuchtungsraster 2 anstrahlt, von dem aus paralleles Licht auf die in dem Strahlengang angeordnete Windschutzscheibe 3 fällt. Es versteht sich, daß anstelle der Windschutzscheibe 3 auch jeder andere Gegenstand gemessen werden kann, der zumindest für Licht bestimmter Wellenlängen, vorzugsweise im sichtbaren Bereich, transparent ist.

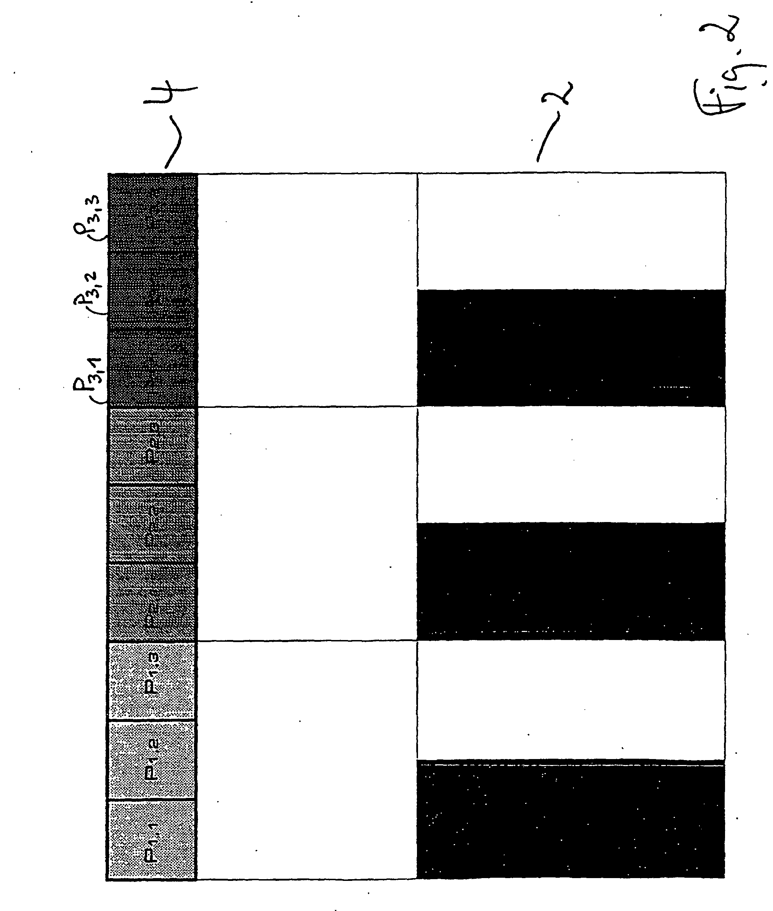

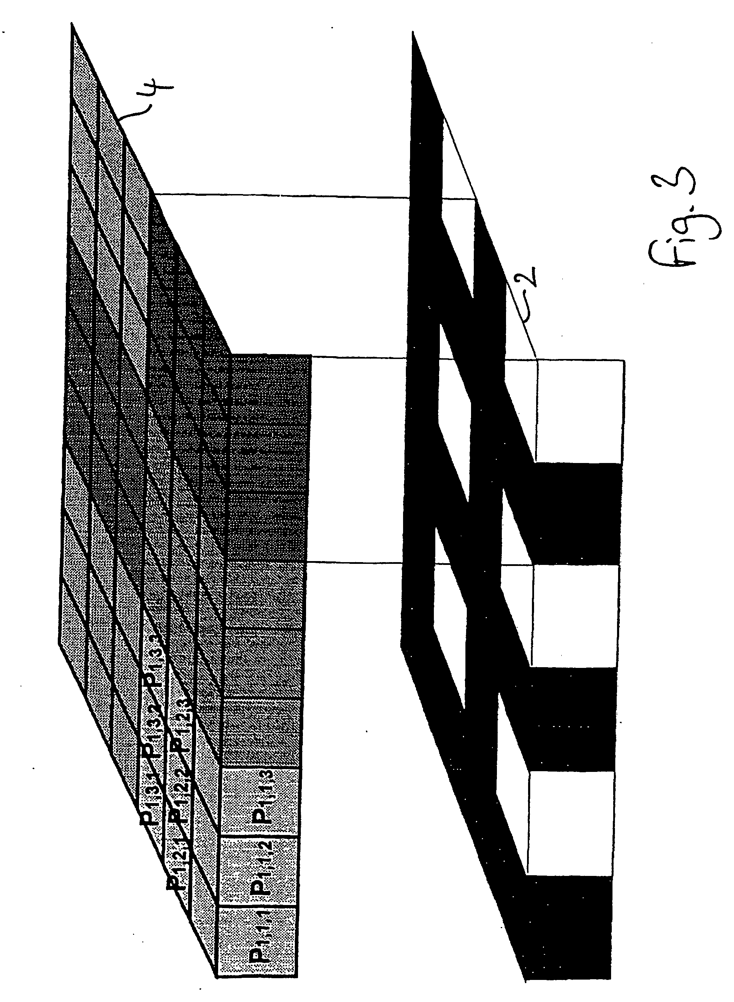

Das Kreuzraster 2 rastert das von der Lichtquelle 1 eintreffende Licht derart auf, daß nur ein Viertel des Lichtes durchtritt, während die übrigen drei Viertel des Lichtes von horizontalen opaken Streifen und vertikalen opaken Streifen, die sich kreuzen und die transparenten Quadrate eingrenzen, am Durchtritt gehindert werden. Die Kantenlänge der transparenten Quadrate und der opaken Streifen ist identisch. Damit ergibt sich ein Hell-Dunkel-Muster, wie in den Fig. 2 und 3 zu erkennen.

Die Abmessungen des Rasters 2 entsprechen in etwa der Größe des zu messenden Gegenstands.

Das Raster 2 wird durch die Windschutzscheibe 3 direkt und ohne Zwischenschaltung eines Referenzrasters auf eine Kamera 4 abgebildet, die die Hell-Dunkel-Intervalle auf der Windschutzscheibe aufnimmt. Es versteht sich, daß anstelle opaker und transparenter Linien auch allgemein Linien unterschiedlicher Transparenz Verwendung finden können, ggf. auch bezüglich nur eines bestimmten Frequenzspektrums, für das die Kamera 4 empfindlich ist.

Bei einer "idealen" Windschutzscheibe würde das Bild des Kreuzrasters 2 unverändert auf die Kamera projiziert werden. Das Kreuzraster 2 und die Kamera 4 sind derart aufeinander abgestimmt, daß jeweils ein Paar von Hell-Dunkel-Streifen auf drei benachbarte Pixel der Kamera 4 abgebildet wird, wie dies in den Figuren 2 und 3 deutlicher zu erkennen ist. Ausgehend von den einzelnen Pixeln, die mit P_{i,j} (Fig. 2) bzw. P_{i,j,k} (Fig. 3) bezeichnet sind, wobei i das i-te Streifenpaar des Kreuzrasters (bzw. das i-te Tripel von Pixeln) bezeichnet, das j-te Pixel (j = 1, 2 oder 3) in dem Tripel bezeichnet in Richtung des Streifens und, im Falle einer Matrixkamera, k das k-te Pixel (k = 1, 2 oder 3) senkrecht zu der Erstreckung des j-ten Pixels bezeichnet für jeweils eine Zeile der Matrix aus Pixeln; es versteht sich, daß ferner ein Zeilenindex existiert. Diese Pixeladressen können auch in der anschließenden Auswertung der Matrix einzeln angesprochen werden.

Im Falle einer idealen Abbildung auf die Kamera 4 kommt es infolge des Umstands, daß die Gitterfrequenz der Kamerapixel und die Gitterfrequenz des Beleuchtungsrasters 2 Vielfache voneinander sind, zu einer regelmäßigen Moiré-Erscheinung, die an der Kamera registriert wird. Durch einfache Umformung der Meßwerte der Pixel in eine Funktion mit Sinusverlauf lassen sich Phasenverschiebungen sowie Dehnungen und Stauchungen der Sinuskurve ermitteln.

Wenn aufgrund einer Lichtbrechung in der Scheibe die Abbildung auf die Kamera 4 nicht mehr ideal ist, sondern abweicht, kommt es zu einer Störung in der Moiré-Erscheinung an den Kamerapixeln, die als Phasenverschiebung am Ausgang der Kamerapixel erfaßbar ist und mit geringem Aufwand den Winkel ermitteln läßt, um den der Lichtstrahl abgelenkt wurde. Ausgehend von diesem Winkel läßt sich die Brechkraft in vertikaler Richtung, die die Geradeaussicht beeinflußt, und in horizontaler Richtung, die die Seitendurchsicht beeinflußt, der Windschutzscheibe durch Differentiation ermitteln.

Durch die Wahl des Verhältnisses ein Rasterlinienpaar (also 2 Linien, eine helle und eine dunkle) zu 3 Pixeln wird ein sehr gutes Verhältnis der Breitenabmessungen zueinander ermöglicht, wodurch die Auflösung der Meßwerte bzw. die zulässige Größe der zu messenden Windschutzscheibe 3 sehr groß wird. Der apparative Aufwand für die Vorrichtung bleibt gering.

Es versteht sich, daß anstelle von Hell-Dunkel-Paaren oder des Kreuzrasters 2 auch Raster mit mehreren Helligkeitsabstufungen durch Sequenzen mit mehr als zwei Lichtintensitäten vergleichbar eingesetzt werden können. Entsprechend kann die Anzahl der Pixel je Hell-Dunkel-Paar bzw. -Sequenz auch vier, fünf, ... betragen.

Es versteht sich ferner, daß anstelle der Anordnung mit Lichtquelle 1 und Raster 2 auch eine der Größe des Rasters entsprechende Tafel mit einer LED-Matrix eingesetzt werden könnte, wodurch vorteilhaft die einzelnen LED-Streifen über spezifische elektrische Kontakte ansteuerbar werden. Auch andere Mittel zum Erzeugen eines Lichtmusters sind also anstelle eines beleuchteten Rasters möglich. Das Raster weist den Vorteil auf, daß einfache geometrische Formen wie Linien auch bei hohen Anforderungen an die Präzision billig herstellbar sind.

## Patentansprüche

1. Vorrichtung zur Ermittlung von optischen Fehlern, insbesondere der Brechkraft, in grossflächigen Scheiben aus einem transparenten Werkstoff wie Glas mittels einer Auswertung des beobachteten Bildes, umfassend
eine Lichtquelle zum Projizieren eines definierten Musters aus regelmässigen Sequenzen, wobei die Sequenzen wenigstens zwei unterschiedliche Lichtintensitäten umfassen;
Mittel zum Anordnen der Scheibe (3) in den Strahlengang der Projektion; und
eine Kamera (4), wobei Sequenzen des Musters auf Pixel der Kamera gerichtet sind,
**dadurch gekennzeichnet,**
**daß** die Lichtquelle eine als Leuchtmatrix ausgebildete Leuchtwand aus einer Vielzahl von selektiv, vorzugsweise zeilen- und/oder spaltenweise ansteuerbaren LEDs ist.

2. Vorrichtung nach Anspruch 1, **dadurch gekennzeichnet, daß** eine Sequenz des Musters jeweils auf eine Anzahl benachbart angeordneter Pixel gerichtet ist, wobei die Anzahl ein ganzzabliges Vielfaches der Sequenz ist.

3. Vorrichtung nach Anspruch 2, **dadurch gekennzeichnet, daß** die Sequenz des Musters wenigstens zwei Lichtintensitäten umfasst, und daß das ganzzahlige Vielfache wenigstens drei beträgt.

4. Vorrichtung nach einem der Ansprüche 1 bis 3, **dadurch gekennzeichnet, daß** das Muster Quadrate umfasst, die von Linien mit derselben Breite wie die Quadrate begrenzt sind.

5. Vorrichtung nach Anspruch 4, **dadurch gekennzeichnet, daß** eine zweidimensionale Sequenz des Musters aus einem hellen Quadrat und zwei sich kreuzenden dunklen Linien besteht.

6. Vorrichtung nach Anspruch 5, **dadurch gekennzeichnet, daß** die zweidimensionale Sequenz auf jeweils benachbarte n x n Pixel einer Matrixkamera gerichtet werden, wobei n ein ganzzahliges Vielfaches der Sequenz grösser zwei ist.

7. Vorrichtung nach einem der Ansprüche 1 bis 3, **dadurch gekennzeichnet, daß** das Muster ein Schachbrettmuster aus dunklen und hellen deckungsgleichen Quadraten ist.

8. Vorrichtung nach Anspruch 7, **dadurch gekennzeichnet, daß** ein quadratischer Flächenbereich bestehend aus zwei Paaren diagonal zueinander versetzt angeordneter heller und dunkler Quadrate auf jeweils benachbarte n x n Pixel einer Matrixkamera gerichtet ist, wobei n eine ganze Zahl grösser zwei ist.

9. Vorrichtung nach Anspruch 2, **dadurch gekennzeichnet, daß** eine Sequenz wenigstens drei verschiedene Lichtintensitäten umfasst, und daß das ganzahlige Vielfache wenigstens zwei beträgt.

10. Vorrichtung nach einem der Ansprüche 1 bis 9, **dadurch gekennzeichnet, daß** das Muster Licht mit verschiedener Wellenlänge oder Farbe aufweist.

11. Vorrichtung nach einem der Ansprüche 1 bis 10, **dadurch gekennzeichnet, daß** die Kamera eine Zeilen- oder Matrixkamera ist.

12. Vorrichtung nach einem der Ansprüche 1 bis 11, **dadurch gekennzeichnet, daß** eine Aufnahme für die Auswertung eines Moire-Bildes an den Pixeln der Kamera zugrunde gelegt wird.

13. Vorrichtung nach einem der Ansprüche 1 bis 12, **dadurch gekennzeichnet, daß** zwei Aufnahmen für die Auswertung eines Moiré-Bildes an den Pixeln der Kamera zugrunde gelegt werden.

14. Vorrichtung nach einem der Ansprüche 1 bis 13, **dadurch gekennzeichnet, daß** das Muster aus einer Vielzahl von selektiv derart ansteuerbaren Streifen besteht, daß jeder Streifen entweder hell oder dunkel erscheint, daß jeder n-te Streifen der Sequenz gleichzeitig beleuchtet wird, wobei n wenigstens gleich drei ist, und daß n benachbarte Streifen sukzessive auf genau ein Pixel der Kamera oder ein ganzzahliges Vielfaches davon abgebildet werden.

15. Vorrichtung nach einem der Ansprüche 1 bis 14, **dadurch gekennzeichnet, daß** die Projektion der Sequenzen des Musters durch das selektive zeilen- und/oder spaltenweise ansteuern a als Leuchtmatrix ausgebildeten Leuchtwand erfolgt, und die Projektion der LED-Wand direkt auf die Scheibe gerichtet ist.

16. Vorrichtung nach einem der Ansprüche 1 bis 15, **dadurch gekennzeichnet, daß** die Kamera eine Zeilen- oder Matrixkamera ist, die zum Abtasten einer Mehrzahl von Sequenzen verlagerbar oder verschwenkbar ist.

17. Vorrichtung nach einem der Ansprüche 1 bis 16, **dadurch gekennzeichnet, daß** ausgehend von der auf den Pixeln der Kamera auftretenden Phasenverschiebung gegenüber dem Beleuchtungsmuster eine Brechkraftänderung in der Scheibe an dem entsprechenden Ort ermittelbar ist.

18. Vorrichtung nach Anspruch 17, **gekennzeichnet durch** Mittel zur Bildung der Differenz des Phasenverlaufs des Bildes mit lichtbrechender Scheibe zu einem Zustand ohne Lichtbrechung.

19. Vorrichtung nach Anspruch 16 oder 17, **dadurch gekennzeichnet, daß** die Brechkraft durch Differentiation des Winkels ermittelbar ist, um den der Lichtstrahl in der Scheibe abgelenkt wird.

20. Vorrichtung nach Anspruch 18 oder 19, **dadurch gekennzeichnet, daß** alle ermittelten Werte der Lichtbrechung mit jeweils für den beobachteten Ort der Scheibe zulässigen Schwellenwerten verglichen werden, und daß bei überschreiten eines Schwellenwertes ein ablehnendes Signal generierbar ist.

21. Vorrichtung nach einem der Ansprüche 1 bis 20, **dadurch gekennzeichnet, daß** die Scheibe planes oder gebogenes Flachglas oder Kunststoff ist.

22. Vorrichtung nach einem der Ansprüche 1 bis 20, **dadurch gekennzeichnet, daß** die Scheibe eine Sehhilfe aus Glas oder Kunststoff ist.

23. Vorrichtung nach einem der Ansprüche 1 bis 22, **dadurch gekennzeichnet, daß** die Kamera eine Farbkamera ist.

24. Vorrichtung nach Anspruch 23, **dadurch gekennzeichnet, daß** die Auswertung desselben Bildes bezüglich unterschiedlicher aufgenommener Farben erfolgt.

25. Verwendung der Vorrichtung nach einem der Ansprüche 1 bis 24 zum Erzeugen einer Mehrzahl von regelmäßigen Sequenzen in wenigstens einer Dimension der Scheibe.

26. Verfahren zum Erzeugen eines Musters aus wenigstens zwei Lichtintensitäten in einer Vorrichtung zur Ermittlung von optischen Fehlern nach einem der Ansprüche 1 bis 24; insbesondere der Brechkraft, von grossflächigen Scheiben aus einem transparenten Werkstoff wie Glas mittels einer Auswertung des beobachteten Bildes,
**dadurch gekennzeichnet,**
**daß** die Leuchtwand als Leuchtmatrix ausgebildet ist und eine Vielzahl von LEDs aufweist, und
**daß** das Muster durch selektives Ansteuern der LEDs erzeugt wird.

27. Verfahren zur Ermittlung von optischen Fehlern, insbesondere der Brechkraft, in großflächigen Scheiben aus einem transparenten Werkstoff wie Glas mittels einer Auswertung des beobachteten Bildes, umfassend die Schritte
Erzeugen eines Musters aus wenigstens zwei Lichtintensitäten durch eine Leuchtwand;
Anordnen der Scheibe in den Strahlengang der Projektion; und
Abbilden von Sequenzen des Musters auf eine Kamera,
**dadurch gekennzeichnet,**
**daß** die Leuchtwand als Leuchtmatrix ausgebildet ist und eine Vielzahl von LEDs aufweist, und
**daß** das Muster durch selektives Ansteuern der LEDs erzeugt wird.

28. Verfahren nach Anspruch 27, **dadurch gekennzeichnet, daß** die aufgenommene Intensität der beobachteten LEDs ausgewertet wird.

29. Verfahren nach Anspruch 27, **dadurch gekennzeichnet, daß** eine an einer Pixelzeile einer als CCD-Kamera ausgebildeten Kamera erzeugte Moiré-Bild ausgewertet wird.

30. Verfahren nach Anspruch 27, **dadurch gekennzeichnet, daß** mehrere Aufnahmen mit unterschiedlicher Beleuchtung der Leuchtwand ausgewertet werden.

31. Verfahren nach einem der Ansprüche 27 bis 30, **dadurch gekennzeichnet, daß** die Belichtungszeit der Kamera und die Dauer der Beleuchtung synchronisiert sind.

32. Verfahren nach einem der Ansprüche 26 bis 31, **dadurch gekennzeichnet, daß** die LEDs streifenweise angesteuert werden, und daß die angesteuerten Streifen abwechselnd beleuchtet und nicht beleuchtet werden.

33. Verfahren nach einem der Ansprüche 26 bis 31, **dadurch gekennzeichnet, daß** mindestens drei benachbarte Streifen des Musters nacheinander beleuchtet werden.

34. Verfahren nach einem der Ansprüche 26 bis 31, **dadurch gekennzeichnet, daß** die LEDs unterschiedliche Farben aufweisen.

35. Verfahren nach einem der Ansprüche 26 bis 34, **dadurch gekennzeichnet, daß** das Ansteuern der LEDs einzeln, blockweise, in Spalten und/oder in Zeilen erfolgt.

## Claims

1. A device for determining optical errors, in particular in the refractive power, in large-area panes of a transparent material such as glass, by evaluation of the observed image, comprising
a light source for projecting a defined pattern composed of regular sequences, with the sequences comprising at least two different light intensities;
means for arranging the pane in the beam path of the projection; and
a camera (4), wherein sequences of the pattern are aimed towards pixels of the camera,
**characterised in**
**that** the light source is embodied as a light wall designed as a light matrix comprising a plurality LEDs which can be actuated selectively, preferably in lines and/or in columns.

2. The device as claimed in claim 1, **characterised in that** a sequence of the pattern in each case is aimed on an integer number of adjacently arranged pixels, wherein the number is an integer multiple of the sequence.

3. The device as claimed in claim 2, **characterised in that** the sequence of the pattern comprises at least two light intensities, and that the integer multiple is at least three.

4. The device as claimed in one of claims 1 to 3, **characterised in that** the pattern comprises squares which are bounded by lines having the same width as the squares.

5. The device as claimed in claim 4, **characterised in that** a two-dimensional sequence of the pattern comprises a light square and two crossing dark lines.

6. The device as claimed in claim 5, **characterised in that** the two-dimensional sequence is aimed on respectively adjacent n x n pixels of a matrix camera, where n is an integer multiple of the sequence, greater than two.

7. The device as claimed in one of claims 1 to 3, **characterised in that** the pattern is formed as a checkerboard pattern composed of dark and light coincident squares.

8. The device as claimed in claim 7, **characterised in that** a square surface area comprising two pairs of light and dark squares, which are arranged diagonally offset with one another, are aimed on respectively adjacent n x n pixels of a matrix camera, where n is integer greater than two.

9. The device as claimed in claim 2, **characterised in that** a sequence comprises at least three different light intensities and that the integer multiple is at least two.

10. The device as claimed in one of claims 1 to 9, **characterised in that** the pattern comprises light with different wavelength or colour of the light.

11. The device as claimed in one of claims 1 to 10, **characterised in that** the camera is a line-scan camera or matrix camera.

12. The device as claimed in one of claims 1 to 11, **characterised in that** a record is taken as base for the evaluation of a moiré image on the pixels of the camera.

13. The device as claimed in one of claims 1 to 12, **characterised in that** two records are taken as base for the evaluation of a moiré image on the pixels of the camera.

14. The device as claimed in one of claims 1 to 13, **characterised in that** the pattern comprises a plurality of strips which can be actuated selectively in such a manner that each strip appears either light or dark, that each n-th strip in the sequence is illuminated at the same time, where n is at least equal to three, and that n adjacent strips are aimed successively on just one pixel of the camera, or on an integer multiple thereof.

15. The device as claimed in one of claims 1 to 14, **characterised in that** the sequences of the pattern are projected by selectively actuating lines and/or columns of the light wall which is designed as a light matrix, and a projection of the LED wall is pointed directly at the pane.

16. The device as claimed in one of claims 1 to 15, **characterised in that** the camera is a line-scan camera or matrix camera which is moved or pivoted in order to scan a plurality of sequences.

17. The device as claimed in one of claims 1 to 16, **characterised in that** a change in the refractive power with respect to an illumination pattern in the pane is determined at the corresponding point on the basis of the phase shift which occurs on the pixels of the camera.

18. The device as claimed in claim 17, **characterised by** means for determining the difference in the phase profile of the image between a light-refracting pane and a state without light refraction.

19. The device as claimed in claim 16 or 17, **characterised in that** the refractive power is determined by differentiation of the angle through which the light beam is deflected in the pane.

20. The device as claimed in claim 18 or 19, **characterised in that** all the determined values of the light deflection are compared with threshold values which are permissible for the observed point on the pane, and that a rejecting signal is generated if a threshold value is exceeded.

21. The device as claimed in one of claims 1 to 20, **characterised in that** the pane is planar or curved sheet glass or plastic.

22. The device as claimed in one of claims 1 to 20, **characterised in that** the pane is a vision aid composed of glass or plastic.

23. The device as claimed in one of claims 1 to 22, **characterised in that** the camera is a colour camera.

24. The device as claimed in claim 23, **characterised in that** the evaluation of the same image is carried out with respect to different recorded colours.

25. Use of a device as claimed in one of claims 1 to 24 for generating of a plurality of regular sequences in at least the dimension of the pane.

26. Method for generating a pattern comprising at least two light intensities in a device for determining optical errors as claimed in one of claims 1 to 24, in particular in the refractive power, of large-area panes of a transparent material such as glass, by evaluation of the observed image,
**characterised in**
**that** the light wall which is designed as a light matrix comprising a plurality of LEDs, and
**that** the pattern is generated through selectively actuating of the LEDs.

27. Method for determining optical errors, in particular in the refractive power, in large-area panes of a transparent material such as glass, by evaluation of the observed image, comprising the steps
generating a pattern of at least two light intensities by a light wall;
arranging the pane in the beam path of the projection; and
imaging of sequences of the pattern on a camera;
**characterised in**
**that** the light wall which is designed as a light matrix comprising a plurality of LEDs, and
**that** the pattern is generated through selectively actuating of the LEDs.

28. The method as claimed in claim 27, **characterised in that** the recorded intensity of the observed LEDs is evaluated.

29. The method as claimed in claim 27, **characterised in that** a moiré image generated on a pixel line of a camera embodied as CCD camera is evaluated.

30. The method as claimed in claim 27, **characterised in that** a plurality of records with different illumination of the light wall are evaluated.

31. The method as claimed in one of claims 27 to 30, **characterised in that** the exposure time of the camera and the length of illumination are synchronised.

32. The method as claimed in one of claims 26 to 31, **characterised in that** the LEDs are actuated in strips, and that the actuated strips are alternately illuminated and not illuminated.

33. The method as claimed in one of claims 26 to 31, **characterised in that** at least three adjacent strips of the pattern are illuminated one after the other.

34. The method as claimed in one of claims 26 to 31, **characterised in that** the LEDs are of different colours.

35. The method as claimed in one of claims 26 to 34, **characterised in that** the LEDs are actuated individually, in blocks, in columns and/or in lines.

## Revendications

1. Dispositif de détection d'erreurs optiques, en particulier de la réfringence, dans des plaques de grande surface en matière transparente, comme le verre, en exploitant l'image observée, comportant
une source de lumière pour projeter un motif défini constitué de séquences régulières, les séquences présentant au moins deux intensités lumineuses,
un moyen pour agencer la plaque (3) dans le trajet de faisceau de la projection; et
une caméra (4), des séquences du motif étant dirigés sur des pixels de la caméra,
**caractérisé en ce**
**que** la source de lumière est formée par une paroi luminescente conformée en matrice luminescente qui se compose d'une multitude de LED commandables sélectivement, à préférence par lignes et / ou par colonnes.

2. Dispositif selon la revendication 1, **caractérisé en ce qu'**une séquence du motif est dirigé à chaque fois sur un nombre de pixels agencés voisins, le nombre étant un multiple entier de la séquence.

3. Dispositif selon la revendication 2, **caractérisé en ce que** la séquence du motif présente au moins deux intensités lumineuses, et que le multiple entier est au moins 3.

4. Dispositif selon l'une des revendications 1 à 3, **caractérisé en ce que** le motif comporte des carrés qui sont limités par des lignes de la même largeur que les carrés.

5. Dispositif selon la revendication 4, **caractérisé en ce qu'**une séquence bidimensionelle du motif se compose d'un carré lumineux et de deux lignes sombres qui se croisent.

6. Dispositif selon la revendication 5, **caractérisé en ce que** la séquence bidimensionelle est dirigée à chaque fois sur n x n pixels voisins d'une caméra matricielle, n étant un multiple entier de la séquence supérieur à 2.

7. Dispositif selon l'une des revendications 1 à 3, **caractérisé en ce que** le motif est conformé en motif quadrillé constitué de carrés coïncidents lumineux et sombres.

8. Dispositif selon la revendication 7, **caractérisé en ce qu'**une zone de surface carrée constituée de deux paires de carrés lumineux et sombres, agencés en étant décalés suivant une diagonale, est dirigée à chaque fois sur n x n pixels voisins d'une caméra matricielle, n étant un nombre entier supérieur à 2.

9. Dispositif selon la revendication 2, **caractérisé en ce qu'**une séquence présente au moins trois intensités lumineuses différentes, et **en ce que** le nombre entier est au moins 2.

10. Dispositif selon l'une des revendications 1 à 9, **caractérisé en ce que** le motif se compose de lumière de longueur d'onde ou de couleur différente.

11. Dispositif selon l'une des revendications 1 à 10, **caractérisé en ce que** la caméra est une caméra linéaire ou matricielle.

12. Dispositif selon l'une des revendications 1 à 11, **caractérisé en ce qu'**un enregistrement destiné à l'exploitation d'une image moirée repose sur les pixels de la caméra.

13. Dispositif selon l'une des revendications 1 à 12, **caractérisé en ce que** deux enregistrement destinés à l'exploitation d'une image moirée repose sur les pixels de la caméra.

14. Dispositif selon l'une des revendications 1 à 13, **caractérisé en ce que** le motif se compose d'un grand nombre de bandes commandées sélectivement de sorte que chaque bande semble lumineuse ou sombre, **en ce que** toutes les n-ièmes bandes de la séquence sont éclairées simultanément, n étant au moins égal à 3, et **en ce que** n bandes voisines sont représentées successivement sur précisément un pixel de la caméra ou un multiple entier de celui-ci.

15. Dispositif selon l'une des revendications 1 à 14, **caractérisé en ce que** la projection des séquences du motif est effectuée en commandant sélectivement les lignes et / ou les colonnes de la paroi luminescente conformée en matrice luminescente, et la projection de LED est dirigée directement vers la plaque.

16. Dispositif selon l'une des revendications 1 à 15, **caractérisé en ce que** la caméra est une caméra linéaire ou matricielle qui est déplacée ou qui balaie horizontalement en vue d'explorer une pluralité de séquences.

17. Dispositif selon l'une des revendications 1 à 16, **caractérisé en ce qu'**une variation de réfringence dans la plaque à l'endroit correspondant est détectée à partir du déphasage survenant sur les pixels de la caméra par rapport au motif d'éclairement.

18. Dispositif selon la revendication 17, **caractérisé par** des moyens pour la formation de la différence du profil de phases de l'image avec une plaquer réfringente par rapport à un état sans réfringence.

19. Dispositif selon la revendication 16 ou 17, **caractérisé en ce que** la réfringence est déterminable par différenciation de l'angle de déviation du faisceau lumineux dans la plaque.

20. Dispositif selon la revendication 18 ou 19, **caractérisé en ce que** toutes les valeurs déterminées de la réfringence sont à chaque fois comparées à des valeurs seuils acceptables pour l'endroit observé de la plaque, et qu'un signal rejetant peut être généré en cas de dépassement d'une valeur seuil.

21. Dispositif selon l'une des revendications 1 à 20, **caractérisé en ce que** la plaque est réalisée à partir de matière plastique ou de verre laminé plan ou incurvé.

22. Dispositif selon l'une des revendications 1 à 20, **caractérisé en ce que** la plaque est réalisé par une aide visuelle en verre ou en matière plastique.

23. Dispositif selon l'une des revendications 1 à 22, **caractérisé en ce que** la caméra est une caméra couleur.

24. Dispositif selon la revendication 23, **caractérisé en ce que** l'exploitation de la même image est effectuée vis-à-vis des différentes couleurs enregistrées.

25. Usage du dispositif selon l'une des revendications 1 à 24 pour générer une pluralité de séquences régulières dans au moins une dimension de la plaque.

26. Procédé de génération d'un motif composé d'au moins deux intensités lumineuses dans un dispositif de détection d'erreurs optiques selon l'une des revendications 1 à 24, en particulier de la réfringence, dans des plaques de grande surface en matière transparente, comme le verre, en exploitant l'image observée,
**caractérisé en ce**
**que** la paroi luminescente est formée en matrice luminescente et présente une multitude de LED, et
**que** le motif est formé en commandant sélectivement les LED.

27. Procédé de détection d'erreurs optiques, en particulier de la réfringence, dans des plaques de grande surface en matière transparente, comme le verre, en exploitant l'image observée, comportant les étapes consistant à
générer un motif constitué d'au moins deux intensités lumineuses par une paroi luminescente;
agencer la plaque dans le trajet de faisceau de la projection; et
représenter des séquences du motif sur une caméra,
**caractérisé en ce**
**que** la paroi luminescente est formée en matrice luminescente et présente une multitude de LED, et
**que** le motif est formé en commandant sélectivement les LED.

28. Procédé selon la revendication 27, **caractérisé en ce que** l'intensité enregistrée des LED observés est exploitée.

29. Procédé selon la revendication 27, **caractérisé en ce que** l'on exploite l'image moirée formée dans une ligne de pixels d'une caméra conformée en caméra CCD.

30. Procédé selon la revendication 27, **caractérisé en ce que** l'on exploite plusieurs enregistrements de la paroi luminescente par illumination différente.

31. Procédé selon l'une des revendications 27 à 30, **caractérisé en ce que** le temps de pose de la caméra et la durée de l'illumination sont synchronisés.

32. Procédé selon l'une des revendications 26 à 31, **caractérisé en ce que** les LED sont commandés par bandes, et que les bandes commandées sont alternativement illuminées et non-illuminées.

33. Procédé selon l'une des revendications 26 à 31, **caractérisé en ce qu'**au moins trois bandes voisines du motif sont illuminées successivement.

34. Procédé selon l'une des revendications 26 à 31, **caractérisé en ce que** les LED présentent des couleurs différentes.

35. Procédé selon l'une des revendications 26 à 34, **caractérisé en ce que** la commande des LED est effectuée en commandant les LED seuls, en bloc, par colonnes et / ou par lignes.
